# FASCICULE DE BREVET EUROPEEN

(11) **EP 2 813 088 B1**
(45) Date de publication et mention de la délivrance du brevet: **24.06.2020**
(21) Numéro de dépôt: 13703582.0
(22) Date de dépôt: 08.02.2013
(51) Int. Cl.: H04N 21/436, H04N 21/4367, H04N 21/41, H04N 7/167, G06F 21/10

(54) **SYSTEME DE LECTURE DE CONTENU NUMERIQUE ET PROCEDE DE LECTURE CORRESPONDANT**
SYSTEM ZUM LESEN DIGITALER INHALTE UND ENTSPRECHENDES LESEVERFAHREN
SYSTEM FOR READING DIGITAL CONTENT AND CORRESPONDING METHOD OF READING

(30) Priorité: 08.02.2012 FR 1251173
(43) Date de publication de la demande: 17.12.2014
(73) Titulaire: Bouygues Telecom, 75116 Paris (FR)
(72) Inventeur: GUEROUT, Simon, F-93400 Saint Ouen (FR)
(74) Mandataire: Regimbeau
(86) Numéro de dépôt international: PCT/EP2013/052567
(87) Numéro de publication internationale: WO 2013/117708

(56) Documents cités:
- EP-A1- 2 026 558
- EP-A1- 2 405 648
- GB-A- 2 367 925
- US-A1- 2007 250 872
- US-A1- 2010 239 090
- US-A1- 2010 313 225
- Samsung: "Samsung LED TV series 6 User Manual", , 31 December 2010 (2010-12-31), XP055276988, Retrieved from the Internet: URL:http://org.downloadcenter.samsung.com/ downloadfile/ContentsFile.aspx?CDSite=UNI_ UK&CttFileID=2993601&CDCttType=UM&ModelTyp e=N&ModelName=UE40C6000RK&VPath=UM/201005/ 20100511130307859/BN68-02748D-00Eng-0402.p df [retrieved on 2016-06-01]

## Description

### DOMAINE DE L'INVENTION

Le domaine de l'invention est celui de l'accès à des contenus numériques chiffrés, s'agissant notamment du téléchargement, de l'enregistrement et de la lecture de tels contenus.

L'invention est applicable notamment aux systèmes de lecture de contenu numérique tels que des téléviseurs connectés à un réseau.

### ETAT DE LA TECHNIQUE

On compte parmi les téléviseurs récents des téléviseurs dits connectés en ce qu'ils sont raccordés à Internet, typiquement via un dispositif d'accès intégré (connu sous le nom anglais « integrated access device » ou IAD).

Certains programmes sont parfois chiffrés pour en limiter la diffusion. C'est notamment le cas des programmes payants tels que la vidéo à la demande (connu sous l'acronyme anglais VOD pour Video On Demand).

Pour assurer le déchiffrement de ces programmes, les téléviseurs sont munis d'une connectique de type « interface commune » (« CI », ou « CI+ », pour « Common Interface ») permettant de connecter un module de contrôle d'accès (« Conditionnai Access Module » ou CAM) adapté pour déchiffrer les flux numériques chiffrés.

C'est par exemple un enseignement du document US 2007/250872, ou du document WO2011/070036, qui décrit un magnétoscope numérique pouvant être connecté ou intégré à un dispositif de lecture de contenu numérique tel qu'une télévision. Ce magnétoscope numérique comprend en outre un module de contrôle d'accès et une interface de connexion à un réseau par l'intermédiaire de laquelle le module de contrôle d'accès récupère les informations nécessaires pour réaliser le déchiffrement d'un contenu numérique.

Les requêtes de déchiffrement de contenu numérique peuvent provenir d'une application hébergée par le dispositif de lecture ou l'un de ces périphériques (par exemple une application de VOD, une application d'enregistrement, un gadget logiciel type « widget », etc.).

Or ces applications ne sont parfois pas adaptées pour communiquer avec un module de contrôle d'accès, et l'envoi de requêtes de déchiffrement à un tel module n'est pas possible par le fait qu'il n'existe pas d'interface de programmation entre l'application et le module, permettant le dialogue entre l'application et le module.

La seule solution proposée jusqu'à présent est un téléviseur dans lequel une telle interface de programmation a été prévue initialement.

Ceci ne permet cependant pas de résoudre le problème de défaut de communication entre une application et un module de contrôle d'accès pour des téléviseurs existants.

On connait également du document US 2010/313225 un système permettant la conversion de contenu numérique stocké sur un lecteur de contenu numérique avant l'envoi éventuel du contenu sur le réseau. La conversion est réalisée par un processeur apte à chiffrer ou déchiffrer des flux numériques.

Dans ce document, des applications contenues dans le lecteur de contenu numérique communiquent donc avec le processeur pour effectuer la conversion du contenu numérique, avant l'envoi éventuel dudit contenu via un réseau informatique.

Le système décrit dans ce document concerne une problématique entièrement différente et notamment ne rencontre pas la problématique décrite ci-avant car dans ce document les applications logicielles ne cherchent pas à déchiffrer un flux de contenu numérique provenant d'un réseau.

### PRESENTATION DE L'INVENTION

La présente invention a donc pour but de pallier au problème précité. En particulier, un des buts de l'invention est de permettre à une application hébergée par un dispositif de lecture de contenu numérique de dialoguer avec un module de contrôle d'accès, et ce, en l'absence d'une interface de programmation prévue spécialement à cet effet.

A cet égard, l'invention propose un système de lecture de contenu numérique selon la revendication 1.

L'invention propose en outre un module de contrôle d'accès selon la revendication 5.

L'invention propose enfin un procédé de lecture de contenu numérique selon la revendication 6.

### PRESENTATION DES FIGURES

D'autres caractéristiques, buts et avantages de l'invention ressortiront de la description qui suit, et qui doit être lue en regard des dessins annexés sur lesquels :
- Les figures 1a, 1b, et 1c représentent différents modes de réalisation du système de lecture de contenu numérique.
- Les figures 2a et 2b représentent deux modes de réalisation alternatifs d'une architecture client-serveur mise en œuvre dans le système selon l'invention.
- La figure 3 représente les principales étapes du procédé proposé par l'invention.

### DESCRIPTION DETAILLEE D'AU MOINS UN EXEMPLE DE MISE EN ŒUVRE

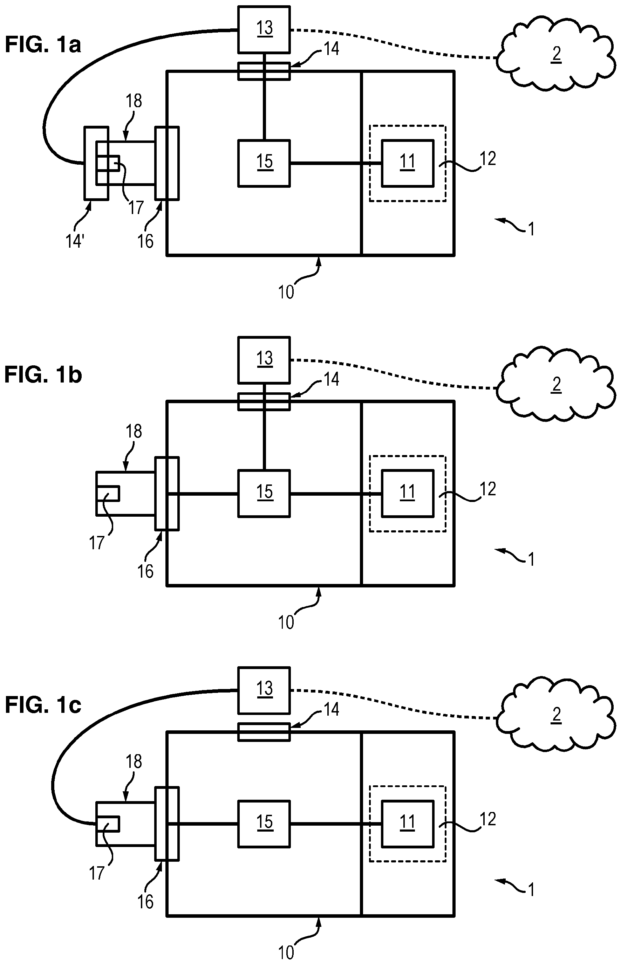

On a représenté en figure 1a, 1b et 1c trois modes de réalisation distincts du système de lecture de contenu numérique.

De manière commune à chacun de ces modes de réalisation, le système 1 selon l'invention comprend un dispositif de lecture de contenu numérique 10. Ce dispositif est connecté, c'est-à-dire qu'il est raccordé à un réseau informatique tel qu'Internet.

De préférence, le dispositif 10 est un téléviseur connecté.

Ce dispositif de lecture de contenu numérique 10 est adapté pour mettre en œuvre au moins une application logicielle 11, qui peut être hébergée par le dispositif de lecture 10 lui-même, ou alternativement par un périphérique 12 raccordé au dispositif.

La ou les applications 11 sont des applications de lecture de contenu chiffré, comme par exemple une application de vidéo à la demande (VOD), une application d'enregistrement, ou un gadget logiciel type « widget », etc.

Le périphérique 12 peut être par exemple un magnétoscope numérique, un support de stockage, par exemple dans le cas d'une application 11 d'enregistrement, ou encore une tablette numérique, un téléphone de type « smartphone », ou tout autre dispositif adapté pour héberger au moins une application logicielle. De manière plus générale, le périphérique 12 est tout périphérique de type DLNA, c'est-à-dire adapté pour mettre en œuvre la norme d'interopérabilité DLNA, ou tout protocole réseau permettant de contrôler les programmes de lecture (« player ») du dispositif de lecture 10.

Le système 1 de lecture d'un contenu numérique comprend en outre un dispositif d'accès 13 à un réseau informatique 2 tel qu'internet, ce dispositif 13 étant de préférence un dispositif d'accès intégré de type IAD.

En tant que dispositif connecté, le dispositif de lecture 10 comprend de préférence mais non limitativement une interface de connexion 14 lui permettant de communiquer avec le dispositif d'accès au réseau 13.

Le dispositif de lecture 10 est pourvu d'une architecture informatique classique en soi, comprenant en particulier un middleware 15 (ou « intergiciel ») assurant les communications entre la ou les applications 11 et l'interface de connexion 14.

En outre, le dispositif 10 est équipé d'une connectique 16 de type « interface commune » CI ou CI+, typiquement sous la forme d'un port adapté, dans lequel on peut insérer un module externe complémentaire, typiquement un module de contrôle d'accès.

Le système 1 de lecture de contenu numérique comprend en outre un module de contrôle d'accès 17, qui est classiquement intégré à une cartouche équipée d'une connectique CI ou CI+ 18 adaptée pour communiquer avec le dispositif 10 via la connectique 16. Le module de contrôle d'accès 17 est adapté pour chiffrer ou déchiffrer des flux lus par le dispositif de lecture 10, ces flux correspondant typiquement à des chaînes cryptées.

Le module de contrôle d'accès peut également être connecté au réseau informatique 2, soit par une interface réseau possédée en propre, soit via le middleware 15 du dispositif de lecture 10.

Comme on l'a vu précédemment, les téléviseurs connectés classiques ne disposent pas de lien de communication entre les applications 11 et les modules de contrôle d'accès 17. En particulier, le middleware 15 du dispositif de lecture 10 ne comprend pas d'interface de programmation qui puisse permettre aux applications 11 de dialoguer avec le module de contrôle d'accès 17.

Par conséquent, lorsque la mise en œuvre d'une application nécessite le déchiffrement d'un flux numérique par le module de contrôle d'accès, cette mise en œuvre est impossible dans ce type de dispositif de lecture 10.

Pour pallier cet inconvénient, le système 1 selon l'invention établit un lien de communication entre les applications 11 et le module de contrôle d'accès 17, au moyen du dispositif d'accès au réseau 13.

En référence aux figures 1a à 1c, le module de contrôle d'accès 17 est connecté, comme le dispositif de lecture 10, au dispositif d'accès au réseau 13.

Dans un premier cas illustré en figure 1a, le module de contrôle d'accès 17 peut être équipé de sa propre interface de connexion 14' pour communiquer avec le dispositif d'accès au réseau 13.

Ce mode de réalisation présente l'avantage de permettre un débit élevé, le module de contrôle d'accès étant doté de sa propre interface de connexion. En outre, il permet de ne pas modifier le téléviseur.

En revanche, d'un point de vue matériel, ce mode de réalisation peut augmenter le nombre de câbles nécessaire aux différentes connexions.

Dans le deuxième cas, en figure 1b, le module de contrôle d'accès ne dispose pas d'une interface de connexion en propre mais est connecté au dispositif d'accès au réseau 13 via le middleware 15 du dispositif de lecture 10.

Ce mode de réalisation présente l'intérêt de conserver un module physique conforme aux modules proposés jusqu'à présent dans le commerce. En revanche le débit de la connexion du module à travers l'interface de connexion du dispositif de lecture peut s'avérer trop bas pour récupérer des flux de taille importante.

Dans le troisième cas, en figure 1c, le dispositif de lecture 10 ne possède pas une interface de connexion en propre, à la différence du module de contrôle d'accès qui en possède une 14. Dans ce cas, le dispositif de lecture 10 est connecté au dispositif d'accès au réseau 13 via l'interface de connexion 14 du module de contrôle d'accès et le middleware du dispositif de lecture 10.

En outre, afin d'assurer la communication entre les applications 11 et le module de contrôle d'accès 17, une architecture client-serveur est implémentée dans le système 1.

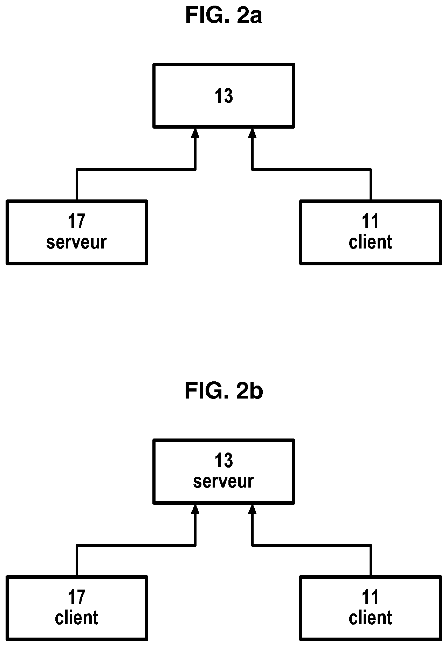

Selon un premier mode de réalisation illustré en figure 2a, un logiciel serveur est hébergé par le module de contrôle d'accès, et un logiciel client correspondant est hébergé par le dispositif de lecture 10 ou le périphérique 12, de sorte que l'application 11 soit apte à mettre en œuvre ledit logiciel client.

Le dispositif 13 d'accès au réseau joue alors un rôle de routeur pour transférer des requêtes émanant du logiciel client au logiciel serveur.

Selon un mode de réalisation alternatif illustré en figure 2b, le logiciel serveur est hébergé par le dispositif d'accès au réseau 13. Dans ce cas, le module de contrôle d'accès 17, ainsi que le dispositif de lecture 10 ou le périphérique 12 hébergent un logiciel client correspondant.

Le logiciel client/serveur utilise un réseau de communication basé sur le protocole IP, et le protocole de communication utilisé est choisi parmi udp ou tcp. La couche application est mise en œuvre par un protocole http.

Le cas échéant, des protocoles propriétaires peuvent être développés pour cette utilisation.

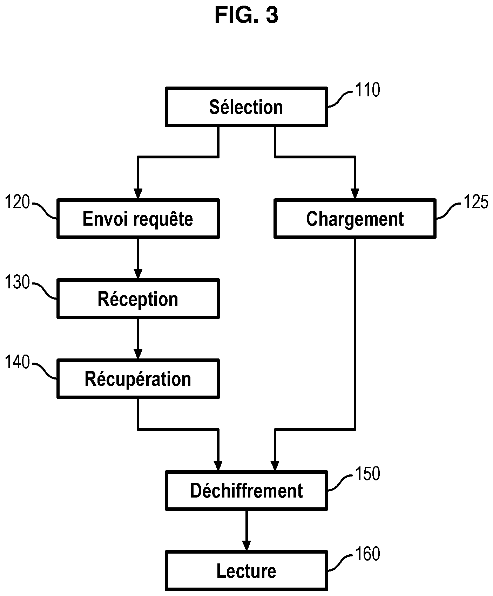

En référence à la figure 3, on a représenté les principales étapes du procédé de lecture de contenu numérique mis en œuvre par le système précédemment décrit.

Au cours d'une étape 110, un utilisateur lance l'exécution d'une application 11 pour sélectionner et lire un contenu chiffré déterminé. Ce contenu chiffré est caractérisé par certaines informations, d'une part, sur le contenu lui-même telles que son URL, ou une référence vers un catalogue. Ces informations sont récupérées par l'application 11 pour permettre le chargement du contenu par le dispositif de lecture 10.

D'autre part, l'application détermine d'autres informations concernant le contenu chiffré, et qui sont nécessaires à son déchiffrement.

Ces informations peuvent être des informations concernant la titularité des droits et/ou les droits d'utilisation du contenu, par exemple des licences sur ce contenu, concernant l'utilisateur, ou encore des informations cryptographiques telles que vecteur d'initialisation, signature numérique etc.

L'obtention de ces informations par le module de contrôle d'accès est nécessaire pour que celui-ci puisse en déduire les données à récupérer sur le réseau 2 pour déchiffrer le contenu.

Ainsi l'application 11 détermine ces informations nécessaires au déchiffrement du contenu, et, au cours d'une étape 120, envoie une requête contenant ces informations au serveur hébergé sur le dispositif d'accès au réseau ou sur le module de contrôle d'accès.

Au cours d'une étape 130, le module de contrôle d'accès récupère la requête. Dans le cas où le serveur est hébergé sur le dispositif d'accès au réseau, ce dernier fait suivre la requête en mode de communication « push » au client hébergé par le module de contrôle d'accès.

Une fois que le module de contrôle d'accès dispose des informations nécessaires au déchiffrement, il récupère sur le réseau 2, au cours d'une étape 140 connue en soi, les clés de déchiffrement correspondant au contenu à déchiffrer. Le cas échéant, il peut également déduire les clés de chiffrement des informations contenues dans la requête de l'application.

En parallèle de ces étapes, l'application 11 détermine les informations sur le contenu lui-même, et les communique au dispositif de lecture au cours d'une étape 125, afin que le dispositif de lecture puisse charger le contenu, par exemple depuis le réseau via le dispositif d'accès au réseau 13.

Le module de contrôle d'accès peut ensuite déchiffrer le contenu au cours d'une étape 150 de déchiffrement, et le contenu est lu par le dispositif 10.

Pour ce faire, le dispositif 10 communique au module de contrôle d'accès le contenu à déchiffrer (par exemple un contenu de type VOD) via l'interface commune. Le module de contrôle d'accès déchiffre le contenu au moyen des clés précédemment obtenues, et renvoie le contenu déchiffré au dispositif 10.

Ce dernier peut alors, au cours d'une étape 160, lire le contenu au moyen d'un algorithme de lecture classique.

Optionnellement, si un périphérique 12 de stockage est connecté au dispositif de lecture 10, le flux déchiffré peut être enregistré sur le périphérique de stockage.

L'invention permet donc de résoudre le défaut de communication entre une application commandée par un utilisateur et un module de contrôle d'accès. En il est possible pour l'utilisateur de conserver son téléviseur.

## Revendications

1. Système de lecture de contenu numérique (1) comprenant :
- un dispositif (13) d'accès à un réseau informatique ;
- un dispositif (10) de lecture de contenu numérique apte à communiquer avec le dispositif d'accès (13) à un réseau informatique (2) via une interface de connexion (14), et adapté pour mettre en oeuvre au moins une application logicielle (11), et
- un module de contrôle d'accès (17) apte à chiffrer ou déchiffrer des flux numériques, le module de contrôle d'accès (17) étant associé au dispositif (10) de lecture de contenu numérique au moyen d'une interface commune (16) et connecté au dispositif d'accès (13) à un réseau informatique (2),
le système étant **caractérisé en ce que** le module (17) de contrôle d'accès présente une interface de connexion (14') assurant sa connexion avec le dispositif (13) d'accès au réseau, **en ce que** la ou les applications numériques (11) du dispositif (10) de lecture communiquent avec le module de contrôle d'accès (17) via le dispositif (13) d'accès à un réseau, et **en ce que** ladite communication est mise en oeuvre au moyen d'un logiciel serveur hébergé par le module de contrôle d'accès (17) ou le dispositif d'accès (13).

2. Système (1) de lecture de contenu numérique selon la revendication 1, dans lequel le logiciel serveur est hébergé par le module (17) de contrôle d'accès, et lesdites applications (11) mettent en oeuvre un logiciel client apte à communiquer avec le logiciel serveur.

3. Système (1) de lecture de contenu numérique selon la revendication 1, dans lequel le logiciel serveur est hébergé par le dispositif (13) d'accès à un réseau, et le module (17) de contrôle d'accès et lesdites applications (11) mettent en oeuvre un logiciel client apte à communiquer avec le logiciel serveur.

4. Système (1) de lecture de contenu numérique selon l'une des revendications 2 ou 3, dans lequel les logiciels serveur et client utilisent au moins un protocole de communication choisi parmi le groupe suivant : ip, tcp, udp, http,.

5. Module de contrôle d'accès (17) adapté pour être connecté à un dispositif (10) de lecture de contenu au moyen d'une interface commune (16), le dispositif (10) de lecture de contenu étant adapté pour mettre en oeuvre au moins une application logicielle (11) et connecté à un réseau informatique (2) via un dispositif d'accès (13) audit réseau,
le module de contrôle d'accès (17) étant **caractérisé en ce qu'**il présente une interface de connexion (14') assurant sa connexion avec le dispositif (13) d'accès au réseau, et qu'il héberge un logiciel serveur ou client permettant la communication entre ledit module (17) de contrôle d'accès et la ou les applications logicielles (11) via le dispositif (13) d'accès au réseau.

6. Procédé de lecture de contenu numérique mis en oeuvre par le système selon l'une des revendications précédentes, dans lequel un utilisateur exécute une application (11) pour le chargement d'un contenu numérique chiffré par la mise en oeuvre des étapes suivantes :
- l'application (11) détermine des informations relatives au contenu numérique chiffré,
- l'application (11) envoie une requête contenant lesdites informations au dispositif (13) d'accès à un réseau informatique,
- le dispositif (13) d'accès à un réseau informatique route la requête au module de contrôle d'accès (17),
- le module de contrôle (17) d'accès récupère lesdites informations, et à partir de ces informations, récupère des clés de déchiffrement disponibles sur le réseau et nécessaires au déchiffrement du contenu numérique chiffré,
- le dispositif (10) de lecture envoie au module (17) de contrôle d'accès le contenu numérique chiffré via le dispositif (13) d'accès à un réseau informatique,
- à partir des clés de déchiffrement et du contenu numérique chiffré, le module (17) de contrôle d'accès déchiffre le contenu numérique, et l'envoie au dispositif (10) de lecture via le dispositif d'accès (13), et le dispositif (10) de lecture lit le contenu numérique.

7. Procédé de lecture de contenu numérique selon la revendication précédente, dans lequel un logiciel serveur est hébergé sur le dispositif (13) d'accès au réseau informatique ou sur le module (17) de contrôle d'accès.

8. Procédé de lecture de contenu numérique selon la revendication précédente, dans lequel l'application (11) est hébergée par le dispositif (10) de lecture de contenu numérique ou par un périphérique (12) connecté à celui-ci.

9. Procédé de lecture de contenu numérique selon l'une des revendications 6 à 8, dans lequel l'application (11) est une application (11) de vidéo à la demande.

10. Procédé de lecture de contenu numérique selon l'une des revendications 6 à 9, dans lequel les informations nécessaires au déchiffrement du contenu numérique comprennent des informations sur les droits relatifs au contenu numérique, et/ou des informations cryptographiques.

## Patentansprüche

1. System zum Lesen eines digitalen Inhalts (1), umfassend:
- eine Vorrichtung (13) für den Zugang zu einem Computernetzwerk;
- eine Vorrichtung (10) zum Lesen eines digitalen Inhalts, die fähig ist, mit der Vorrichtung für den Zugang (13) zu einem Computernetzwerk (2) über eine Verbindungsschnittstelle (14) zu kommunizieren, und die angepasst ist, um mindestens eine Software-Anwendung (11) auszuführen, und
- ein Zugangskontrollmodul (17), das fähig ist, digitale Datenströme zu verschlüsseln oder entschlüsseln, wobei das Zugangskontrollmodul (17) mit der Vorrichtung (10) zum Lesen eines digitalen Inhalts mittels einer gemeinsamen Schnittstelle (16) verbunden ist und an die Vorrichtung für den Zugang (13) zu einem Computernetzwerk (2) angeschlossen ist,
wobei das System **dadurch gekennzeichnet ist, dass** das Zugangskontrollmodul (17) eine Verbindungsschnittstelle (14') aufweist, die seinen Anschluss an die Vorrichtung (13) für den Zugang zum Netzwerk sicherstellt, und dadurch, dass die digitale(n) Anwendung(en) (11) der Lesevorrichtung (10) mit dem Zugangskontrollmodul (17) über die Vorrichtung (13) für den Zugang zu einem Netzwerk kommunizieren, und dadurch, dass die Kommunikation mittels einer Server-Software ausgeführt wird, die von dem Zugangskontrollmodul (17) oder der Zugangsvorrichtung (13) gehostet wird.

2. System (1) zum Lesen eines digitalen Inhalts nach Anspruch 1, wobei die Server-Software von dem Zugangskontrollmodul (17) gehostet wird und die Anwendungen (11) eine Client-Software ausführen, die fähig ist, mit der Server-Software zu kommunizieren.

3. System (1) zum Lesen eines digitalen Inhalts nach Anspruch 1, wobei die Server-Software von der Vorrichtung (13) für den Zugang zu einem Netzwerk gehostet wird und das Zugangskontrollmodul (17) und die Anwendungen (11) eine Client-Software ausführen, die fähig ist, mit der Server-Software zu kommunizieren.

4. System (1) zum Lesen eines digitalen Inhalts nach einem der Ansprüche 2 oder 3, wobei die Server- und Client-Software mindestens ein Kommunikationsprotokoll verwenden, das aus folgender Gruppe gewählt wird: ip, tcp, udp, http.

5. Zugangskontrollmodul (17), das angepasst ist, um an eine Vorrichtung (10) zum Lesen eines Inhalts mittels einer gemeinsamen Schnittstelle (16) angeschlossen zu werden, wobei die Vorrichtung (10) zum Lesen eines Inhalts angepasst ist, um mindestens eine Software-Anwendung (11) auszuführen, und an ein Computernetzwerk (2) über eine Vorrichtung für den Zugang (13) zu dem Netzwerk angeschlossen ist,
wobei das Zugangskontrollmodul (17) **dadurch gekennzeichnet ist, dass** es eine Verbindungsschnittstelle (14') aufweist, die seinen Anschluss an die Vorrichtung (13) für den Zugang zum Netzwerk sicherstellt, und dass es eine Server- oder Client-Software hostet, welche die Kommunikation zwischen dem Zugangskontrollmodul (17) und der bzw. den Software-Anwendung(en) (11) über die Vorrichtung (13) für den Zugang zum Netzwerk ermöglichen.

6. Verfahren zum Lesen eines digitalen Inhalts, das von dem System nach einem der vorstehenden Ansprüche ausgeführt wird, wobei ein Benutzer eine Anwendung (11) ausführt zum Laden eines verschlüsselten digitalen Inhalts durch die Ausführung folgender Schritte:
- die Anwendung (11) bestimmt Informationen in Bezug auf den verschlüsselten digitalen Inhalt,
- die Anwendung (11) sendet eine Anfrage, welche die Informationen enthält, an die Vorrichtung (13) für den Zugang zu einem Computernetzwerk,
- die Vorrichtung (13) für den Zugang zu einem Computernetzwerk routet die Anfrage zu dem Zugangskontrollmodul (17),
- das Zugangskontrollmodul (17) holt sich die Informationen und ausgehend von diesen Informationen holt es sich Schlüssel zum Entschlüsseln, die in dem Netzwerk verfügbar und zum Entschlüsseln des verschlüsselten digitalen Inhalts notwendig sind,
- die Lesevorrichtung (10) sendet an das Zugangskontrollmodul (17) den verschlüsselten digitalen Inhalt über die Vorrichtung (13) für den Zugang zu einem Computernetzwerk,
- ausgehend von den Schlüsseln zum Entschlüsseln und von dem verschlüsselten digitalen Inhalt entschlüsselt das Zugangskontrollmodul (17) den digitalen Inhalt und sendet ihn an die Lesevorrichtung (10) über die Zugangsvorrichtung (13) und die Lesevorrichtung (10) liest den digitalen Inhalt.

7. Verfahren zum Lesen eines digitalen Inhalts nach dem vorstehenden Anspruch, wobei eine Server-Software auf der Vorrichtung (13) für den Zugang zum Computernetzwerk oder auf dem Zugangskontrollmodul (17) gehostet ist.

8. Verfahren zum Lesen eines digitalen Inhalts nach dem vorstehenden Anspruch, wobei die Anwendung (11) von der Vorrichtung (10) zum Lesen eines digitalen Inhalts oder von einem an diese angeschlossenen Peripheriegerät (12) gehostet wird.

9. Verfahren zum Lesen eines digitalen Inhalts nach einem der Ansprüche 6 bis 8, wobei die Anwendung (11) eine Anwendung (11) für Video-on-Demand ist.

10. Verfahren zum Lesen eines digitalen Inhalts nach einem der Ansprüche 6 bis 9, wobei die Informationen, die zum Entschlüsseln des digitalen Inhalts notwendig sind, Informationen über die Rechte in Bezug auf den digitalen Inhalt und/oder kryptografische Informationen umfassen.

## Claims

1. Digital content reading system (1) comprising:
- a computer network access device (13);
- a digital content reading device (10) able to communicate with the computer network (2) access device (13) via a connection interface (14), and adapted to execute at least one software application (11), and
- a conditional access module (17) capable of encrypting or decrypting digital streams, the conditional access module (17) being associated with the digital content reading device (10) via a common interface, and connected to the computer network (2) access device (13),
the system being **characterised in that** the conditional access module (17) has a connection interface (14') providing the connection thereof with the network access device (13), **in that** the digital application(s) (11) of the reading device (10) communicate with the conditional access module (17) via the network access device (13), and **in that** said communication is carried out by means of server software hosted by the conditional access module (17) or the access device (13).

2. Digital content reading system (1) according to claim 1, wherein the server software is hosted by the conditional access module (17), and said applications (11) run client software able to communicate with the server software.

3. Digital content reading system (1) according to claim 1, wherein the server software is hosted by the network access device (13), and the conditional access module (17) and said applications (11) run client software able to communicate with the server software.

4. Digital content reading system (1) according to one of claims 2 or 3, wherein the server and client software use at least one communication protocol selected from the following group: ip, tcp, udp, http.

5. Conditional access module (17) adapted to be connected to a digital content reading device (10) via a common interface (16), the digital content reading device (10) being adapted to execute at least one software application (11) and connected to a computer network (2) via an access device (13) to said network,
the conditional access module (17) being **characterised in that** it has a connection interface (14') providing the connection thereof with the network access device (13), and that it hosts server or client software enabling communication between said conditional access module (17) and the software application(s) (11) via the network access device (13).

6. Process for reading digital content executed by the system according to one of the preceding claims, wherein a user executes an application (11) for the loading of encrypted digital content by executing the following steps:
- the application (11) determines information relative to the encrypted digital content,
- the application (11) sends a request containing said information to the computer network access device (13),
- the computer network access device (13) routes the request to the conditional access module (17),
- the conditional access module (17) retrieves said information and from this information retrieves decryption keys available on the network and necessary for decryption of the encrypted digital content,
- the reading device (10) sends the encrypted digital content to the conditional access module (17) via the computer network access device (13),
- from the decryption keys and the encrypted digital content, the conditional access module (17) decrypts the digital content and sends it to the reading device (10) via the access device (13), and
the reading device (10) reads the digital content.

7. Process for reading digital content according to the preceding claim, wherein server software is hosted on the network access device (13) or on the conditional access module (17).

8. Process for reading digital content according to the preceding claim, wherein the application (11) is hosted by the digital content reading device (10) or by a peripheral (12) connected to the latter.

9. Process for reading digital content according to one of claims 6 to 8, wherein the application (11) is a video on demand application (11).

10. Process for reading digital content according to any one of claims 6 to 9, wherein the information necessary for decryption of the digital content comprises information on rights relative to digital content, and/or cryptographic information.
